# EUROPÄISCHE PATENTSCHRIFT

(11) **EP 3 781 898 B1**
(45) Veröffentlichungstag und Bekanntmachung des Hinweises auf die Patenterteilung: **26.01.2022**
(21) Anmeldenummer: 19718145.6
(22) Anmeldetag: 12.04.2019
(51) Int. Cl.: G01B 11/16

(54) **SENSORBAUGRUPPE, AKTUATOR, STEUERUNG, ELEKTRISCH VERSTELLBARES MÖBELSTÜCK UND VERFAHREN ZUM BETREIBEN EINES ELEKTRISCH VERSTELLBAREN MÖBELSTÜCKS**
SENSOR ASSEMBLY, ACTUATOR, CONTROLLER, ELECTRICALLY ADJUSTABLE PIECE OF FURNITURE AND METHOD FOR OPERATING AN ELECTRICALLY ADJUSTABLE PIECE OF FURNITURE
MODULE DE CAPTEUR, ACTIONNEUR, COMMANDE, MEUBLE RÉGLABLE ÉLECTRIQUEMENT ET PROCÉDÉ DE FONCTIONNEMENT D'UN MEUBLE RÉGLABLE ÉLECTRIQUEMENT

(30) Priorität: 18.04.2018 DE 102018109215
(43) Veröffentlichungstag der Anmeldung: 24.02.2021
(73) Patentinhaber: LOGICDATA Electronic & Software Entwicklungs GmbH, 8530 Deutschlandsberg (AT)
(72) Erfinder: KRASSER, Edwin, 8010 Graz (AT); LUKAS, Stefan, 8504 Preding (AT)
(74) Vertreter: Epping - Hermann - Fischer
(86) Internationale Anmeldenummer: PCT/EP2019/059533
(87) Internationale Veröffentlichungsnummer: WO 2019/201799

(56) Entgegenhaltungen:
- CA-C- 2 217 150
- DE-B3-102008 051 794
- DE-U1-202010 005 416
- US-A1- 2014 285 342

## Beschreibung

Die vorliegende Offenbarung betrifft eine Sensorbaugruppe für ein elektrisch verstellbares Möbelstück sowie einen Aktuator, eine Steuerung und ein elektrisch verstellbares Möbelstück mit jeweils einer solchen Sensorbaugruppe. Die vorliegende Offenbarung betrifft ferner ein Verfahren zum Betreiben eines elektrisch verstellbaren Möbelstücks.

Verstellbare Möbel sind sowohl im Bereich von Büroeinrichtungen als auch im Heimbereich bekannt. Häufigste Ausführungen im Büromöbelbereich sind beispielsweise elektrisch verstellbare Tische oder Stühle, während im Heimbereich elektrisch verstellbare Betten, Sitzmöbel oder Liegemöbel bekannt sind.

Bei elektrisch verstellbaren Möbeln besteht beispielweise regelmäßig die Gefahr einer Kollision mit einem Gegenstand oder einem Körperteil. Die Kollision führt zu einer Krafteinwirkung auf Elemente des Möbelsystems, die eine Verformung dieser Elemente zur Folge hat, z.B. eine Verformung einer Tischplatte. Konzepte, um diese Krafteinwirkung zu erkennen, gibt es viele, u.a. basierend auf Dehnmessstreifen, DMS, oder mittels Piezo-basierenden Kraftaufnehmern.

Um Verletzungen von Personen/Tieren oder Beschädigungen des Möbelsystems zu vermeiden, sollte die Kollision schon bei sehr geringen Krafteinwirkungen bzw. Verformungen erkannt werden. Gleichzeitig sollen Fehlauslösungen verhindert werden.

DE 10 2008 051 794 B3 offenbart eine Sensoreinheit zur Detektion von Verformungen an einem Fahrzeugbauteil, welche ein am Fahrzeugbauteil angeordnetes Blendenbauteil umfasst, welches bei einer Verformung in diesem Bereich relativ zu einer Emitter- und Detektoreinheit verschoben wird. Die Strahlengänge werden somit bei Verformung unterbrochen.

DE 20 2010 005 416 U1 offenbart eine elektromotorische Verstelleinrichtung für ein Möbel umfassend eine Sicherheitseinrichtung mit einem Lichtsender, wobei der erzeugte Lichtstrahl auf ein verstellbares Bauteil gerichtet ist, von wo der Lichtstrahl reflektiert und zu einem Lichtempfänger geleitet wird. So kommt es zu einer Änderung der detektierten Lichtintensität bei Verformung des Bauteils.

Eine zu lösende Aufgabe besteht darin, ein verbessertes Messkonzept anzugeben, welches eine genaue Erkennung von Krafteinwirkungen bzw. Verformungen von Komponenten eines verstellbaren Möbelstücks ermöglicht.

Diese Aufgabe wird gelöst mit dem Gegenstand der unabhängigen Patentansprüche. Ausgestaltungen und Weiterbildungen sind in den abhängigen Ansprüchen gekennzeichnet.

Das verbesserte Messkonzept basiert auf der Idee, dass eine Krafteinwirkung auf bewegliche Elemente oder Komponenten eines elektrisch verstellbaren Möbelstücks eine Verformung mindestens eines Elements des Möbelstücks zur Folge hat und diese Verformung erfasst wird. Dazu wird ein Sensor mit einer Lichtstrecke zwischen einem Lichtsender und einem Lichtempfänger sowie mit einem Blendenelement eingesetzt. Das Blendenelement kann beweglich in die Lichtstrecke eindringen, um eine Lichtmenge, die am Lichtempfänger empfangen wird, zu beeinflussen. Im Betrieb des Sensors wird das Blendenelement derart in Verbindung, beispielsweise in Kraftwirkung, mit dem beweglichen Element gebracht, dass eine Bewegung oder Verformung des Elements zu einer Bewegung des Blendenelements relativ zur Lichtstrecke und damit zu einer Beeinflussung der empfangenen Lichtmenge führt.

Zusätzlich kann eine Regelung vorgesehen werden, die durch Variation der vom Lichtsender ausgesendeten Lichtmenge die am Lichtempfänger empfangene Lichtmenge konstant hält. Die bei der Regelung entstehende Stellgröße für den Lichtsender kann dabei als Grundlage für ein Maß der Bewegung oder Verformung oder Krafteinwirkung des verstellbaren Elements dienen, beispielsweise als Verformungssignal. Dieses Verformungssignal kann dann beispielsweise für eine Kollisionserkennung ausgewertet werden, etwa durch Auswertung eines Änderungsverlaufs des Verformungssignals.

Das Blendenelement ist beispielsweise eine mechanische Blende, die die Lichtmenge der Lichtstrecke im Sensor beeinflusst. Die Lichtmenge wird durch das Blendenelement zum Beispiel durch Absorption, Reflektion oder Streuung beeinflusst. Ohne Verformung empfängt der Lichtempfänger eine definierte konstante Lichtmenge. Diese Lichtmenge kann als Normlichtmenge bezeichnet werden. Eine Positionsänderung des Blendenelements relativ zur Lichtstrecke verändert die am Lichtempfänger empfangene Lichtmenge. Wie erwähnt, wird die Differenz beziehungsweise Variation der empfangenen Lichtmenge ausgeglichen, indem man die emittierte Lichtmenge ändert. Führt die Verformung beispielsweise zu einer Reduktion der empfangenen Lichtmenge, dann wird die emittierte Lichtmenge erhöht, bis die empfangene Lichtmenge wieder der Lichtmenge ohne Verformung entspricht, also der Normlichtmenge. Wenn die Verformung zu einer Vergrößerung der empfangenen Lichtmenge führt, dann wird weniger Licht emittiert.

Ein solcher Sensor ist einsetzbar mit vielfältigen elektrisch verstellbaren Möbelstücken, welche wenigstens einen Aktuator zur Verstellung einer verstellbaren Komponente des Möbelstücks und eine Steuerung zur Ansteuerung des wenigstens einen Aktuators umfassen. Solche Möbelstücke sind beispielsweise höhenverstellbare Tische, insbesondere Bürotische, Liegemöbel oder Sitzmöbel, insbesondere im Heimbereich, beispielsweise Betten oder Liegesessel. Die verstellbare Komponente ist beispielsweise eine Tischplatte eines höhenverstellbaren Tischs, oder eine Bettplatte eines verstellbaren Betts.

Beispielsweise umfasst eine Sensorbaugruppe gemäß dem verbesserten Messkonzept für ein solches elektrisch verstellbares Möbelstück einen Lichtsender und einen Lichtempfänger, die über eine optische Lichtstrecke miteinander verbunden sind. Der Lichtempfänger ist zur Abgabe eines Empfangssignals basierend auf einer empfangenen Lichtmenge eingerichtet. Die Sensorbaugruppe weist ferner ein Blendenelement auf, das für eine zumindest teilweise Abdeckung der Lichtstrecke eingerichtet ist, und das bezüglich der Lichtstrecke, insbesondere relativ zur Lichtstrecke, derart beweglich gelagert ist, dass eine Änderung einer Position des Blendenelements in einer Änderung der Abdeckung der Lichtstrecke resultiert. Eine Auswerteschaltung der Sensorbaugruppe ist eingerichtet zum Regeln einer vom Lichtsender abgegebenen Lichtmenge durch ein Stellsignal, das aus einer Minimierung einer Differenz zwischen dem Empfangssignal und einem Referenzsignal resultiert. Ferner ist die Auswerteschaltung eingerichtet zum Erzeugen eines Verformungssignals basierend auf dem Stellsignal oder auf einem vom Stellsignal abgeleiteten Signal. Die Sensorbaugruppe ist eingerichtet für eine Montage in dem Möbelstück derart, dass das Blendenelement eine Verformung oder Bewegung der verstellbaren Komponente in eine Änderung der Position des Blendenelements relativ zur Lichtstrecke umsetzt.

In verschiedenen Ausführungsformen weist die Auswerteschaltung eine Filterstufe auf und ist eingerichtet zum Erzeugen des Verformungssignals durch Filterung des

Stellsignals oder des vom Stellsignal abgeleiteten Signals mit der Filterstufe.

Die Filterstufe kann dabei als Tiefpassfilterstufe ausgebildet sein, wobei der Tiefpassfilterstufe ein Differentiator nachgeschaltet ist. Alternativ kann die Filterstufe als Bandpassfilterstufe ausgebildet sein. Der Einsatz eines Bandpassfilters bewirkt beispielsweise, dass einerseits hochfrequente Störsignale weggefiltert werden, die nichts mit der Krafteinwirkung oder Verformung der Komponente zu tun haben, und dass andererseits tieffrequente langsame Signaländerungen unterdrückt werden, die nicht von einer Kraftänderung aufgrund einer Kollision verursacht werden. Da ein Differentiator auch eine Hochpasswirkung hat, ergibt sich aus der Kombination eines Tiefpassfilters und des Differentiators schließlich auch ein Übertragungsverhalten eines Bandpasses.

Zusätzlich zur Filterung oder integriert in die Filterung kann auch eine Verstärkung vorgesehen sein, um beispielsweise den Signalbereich zu vergrößern.

In verschiedenen Ausführungsformen ist die Lichtstrecke kürzer als 2 cm, insbesondere kürzer als 1 cm. Ein Durchmesser bzw. eine Breite der Lichtstrecke ist beispielsweise kleiner als 1 mm, insbesondere kleiner als 500 µm und beträgt beispielsweise etwa 200 µm. Eine Lichtfläche der Lichtstrecke ist damit kleiner als 1 mm², insbesondere kleiner als 0,25 mm² und bewegt sich beispielsweise im Bereich von etwa 0,04 mm².

Beispielsweise ist die Lichtstrecke als direkte optische Verbindung zur Übertragung von Licht von dem Lichtsender zu dem Lichtempfänger ausgebildet. Vorzugsweise erfolgt die Übertragung dabei ohne die Nutzung von Reflektionen. Insbesondere basiert die Lichtübertragung nicht auf der Reflektion von Lichtstrahlen an einer Fläche. Ebenso basiert die Übertragung nicht auf der Verformung eines Lichtwellenleiters und einer Auswertung einer damit verbundenen Änderung der Lichtmenge.

Beispielsweise sind Lichtsender und Lichtempfänger auf einer gemeinsamen Leiterplatte angeordnet. Vorzugsweise ist die Lichtstrecke dabei parallel oder im Wesentlichen parallel zur Oberfläche der Leiterplatte. Insbesondere ist ein Winkel zwischen der Lichtstrecke und der Oberfläche der Leiterplatte kleiner als 10°, insbesondere kleiner als 5°. Die Bewegungsrichtung des Blendenelements ist vorzugsweise senkrecht zur Lichtstrecke beziehungsweise senkrecht zur Oberfläche der Leiterplatte. Geringe Winkelabweichungen, wie eben erwähnt, können toleriert werden.

Die Form des Blendenelements kann unterschiedlich gewählt werden. Beispielsweise weist das Blendenelement die Form eines Kegels, eines Kegelstumpfs, einer Pyramide, eines Pyramidenstumpfs, eines Zylinders, eines Quaders, eines Zapfens oder einer Form auf, die aus mehreren der genannten Formen zusammengesetzt ist.

Aus der Wahl der Form des Blendenelements ergibt sich auch eine Querschnittsfläche senkrecht zur Lichtstrecke, mit der das Blendenelement in die Lichtstrecke eindringt. Die Lichtstrecke bildet sozusagen die Normale auf diese Querschnittsfläche. Beispielsweise ist die Querschnittsfläche zumindest teilweise durch wenigstens eine der folgenden Formen gebildet: Rechteck, Dreieck, Trapez, Kreissegment, Ellipsensegment. Beispielsweise ist die Querschnittsfläche durch die Kombination eines Rechtecks mit einer Dreiecksform oder Trapezform oder einer Halbkreisform gebildet, ohne andere Kombinationsmöglichkeiten auszuschließen.

Querschnittsflächen mit einer entlang der Bewegungsrichtung veränderlichen Breite können einen kontinuierlicheren Verlauf der Lichtmengenänderung bewirken. Insbesondere kann es beim Eindringen des Blendenelements in die Lichtstrecke, das heißt beim Übergang von keiner Abdeckung zu einer teilweisen Abdeckung, günstig sein, wenn das entsprechende Ende des Blendenelements eine geringere Breite als die Lichtstrecke aufweist, um einen kontinuierlichen Übergang zu ermöglichen.

In verschiedenen Ausgestaltungen weist die Leiterplatte unterhalb der Lichtstrecke eine Öffnung auf, wobei das Blendenelement beweglich über und/oder in der Öffnung gelagert ist.

In verschiedenen Ausführungsformen ist die Lage beziehungsweise die Lagerung des Blendenelements bezüglich der Lichtstrecke so gewählt, dass im Ruhezustand beziehungsweise ohne Krafteinwirkung die emittierte Lichtmenge um einen definierten Faktor größer ist als die empfangene Lichtmenge, beispielsweise doppelt so groß. Dies kann beispielsweise durch eine im Ruhezustand definierte Abdeckung der Lichtstrecke durch das Blendenelement erreicht werden, etwa durch eine zirka 50%ige Abdeckung, insbesondere im Bereich zwischen 40% und 60%. Dadurch können Bewegungen beziehungsweise Verformungen in beiden Richtungen entlang der Bewegungsrichtung des Blendenelements erfasst werden.

In verschiedenen Ausgestaltungen der Sensorbaugruppe ist das Blendenelement für eine feste Montage an der verstellbaren Komponente zum Erzeugen der Änderung der Position des Blendenelements relativ zur Lichtstrecke eingerichtet. Wenn die Sensorbaugruppe in dem Möbelstück montiert ist, ist damit das Blendenelement nicht fest in der Sensorbaugruppe verbunden, sondern ist frei beweglich oder lediglich durch Führungen gelagert.

In einer alternativen Ausgestaltung ist das Blendenelement elastisch in der Sensorbaugruppe gelagert und zum Erzeugen der Änderung der Position des Blendenelements relativ zur Lichtstrecke über eine Berührung der verstellbaren Komponente eingerichtet.

Die Sensorbaugruppe ist vorzugsweise in einem Gehäuse angeordnet. Das Gehäuse muss nicht vollständig geschlossen sein, um die Wirkung zwischen dem Blendenelement und der verstellbaren Komponente zu ermöglichen. Das Gehäuse kann dabei eine offene Seite zu diesem Zweck aufweisen oder eine entsprechende Öffnung vorsehen, um ein Durchdringen mit dem Blendenelement zu ermöglichen.

In verschiedenen Ausführungsformen umfasst die Sensorbaugruppe ein insbesondere eigenes Gehäuse, in dem die Leiterplatte angeordnet ist. In anderen Ausführungsformen ist die Sensorbaugruppe beispielsweise in den Aktuator oder die Steuerung des Möbelstücks integriert.

Dementsprechend lässt sich das verbesserte Messkonzept auch mit einem Aktuator für ein elektrisch verstellbares Möbelstück mit einer Steuerung zur Ansteuerung des wenigstens einen Aktuators umsetzen, wobei der Aktuator zur Verstellung einer verstellbaren Komponente des Möbelstücks eingerichtet ist. Der Aktuator umfasst in einer Ausführungsform eine Sensorbaugruppe gemäß einer der zuvor beschriebenen Ausführungsformen, wobei die Sensorbaugruppe, beispielsweise die Leiterplatte der Sensorbaugruppe, in einem Gehäuse des Aktuators angeordnet ist. Das Blendenelement ist dabei derart in dem Aktuator befestigt, dass eine Verformung oder Bewegung der verstellbaren Komponente über eine Verformung oder Bewegung eines Lagerschild des Aktuators die Änderung der Position des Blendenelements relativ zur Lichtstrecke umsetzt. Beispielsweise ist das Blendenelement starr mit dem Lagerschild verbunden.

Beispielsweise dient das Lagerschild zur Lagerung einer Antriebswelle des Aktuators, welche eine Kraft von der verstellbaren Komponente aufnehmen und auf das Lagerschild übertragen kann.

Das Lagerschild kann in verschiedenen Ausgestaltungen durch die Kraftwirkung bewegt werden. Dabei ist das Lagerschild vorzugsweise elastisch in dem Aktuator gelagert. Alternativ kann sich das Lagerschild auch durch die Krafteinwirkung verformen. In beiden Fällen verändert die Bewegung beziehungsweise Verformung über das Blendenelement die Abdeckung der Lichtstrecke.

In weiteren Ausgestaltungen kann die Sensorbaugruppe auch in die Steuerung integriert sein. Dementsprechend wird das verbesserte Messkonzept auch mit einer Ausführungsform einer Steuerung für ein elektrisch verstellbares Möbelstück mit wenigstens einem Aktuator zur Verstellung einer verstellbaren Komponente des Möbelstücks umgesetzt, wenn die Steuerung eine Sensorbaugruppe gemäß einer der zuvor beschriebenen Ausführungsformen umfasst. Die Steuerung ist dabei zur Ansteuerung des wenigstens einen Aktuators eingerichtet und zur Montage an der verstellbaren Komponente vorgesehen, wobei die Sensorbaugruppe in einem Gehäuse der Steuerung integriert ist. Dies kann insbesondere bei einem höhenverstellbaren Tisch als Möbelstück günstig sein, wenn die Steuerung für eine Montage unter der Tischplatte vorgesehen ist.

Beispielsweise ist die Leiterplatte der Sensorbaugruppe durch eine Leiterplatte der Steuerung gebildet. Insbesondere sind dabei der Lichtsender und der Lichtempfänger auf der Leiterplatte der Steuerung angeordnet.

In verschiedenen Ausführungsformen ist die Steuerung eingerichtet, basierend auf dem Verformungssignal, insbesondere basierend auf einer Änderung des Verformungssignals, eine Kollision zu erkennen und den wenigstens einen Aktuator bei einer erkannten Kollision anzuhalten und/oder eine Bewegungsrichtung des wenigstens einen Aktuators umzuschalten.

Die Kollisionserkennung basiert insbesondere darauf, schnelle und/oder starke Änderungen im Stellsignal bzw. dem daraus abgeleiteten Verformungssignal zu erkennen, unabhängig von einem im Wesentlichen konstanten Ausgangswert, also auch unabhängig von einem absoluten Wert der Abdeckung der Lichtstrecke durch das Blendenelement.

Beispielsweise erfolgt eine Auswertung des Verformungssignals für eine Kollisionserkennung lediglich während eines Verstellvorgangs beziehungsweise Betrieb des Aktuators. Dazu kann die Sensorbaugruppe auch lediglich während des Betriebs des Aktuators beziehungsweise während eines Verstellvorgangs aktiviert werden, während sie im Ruhezustand, also ohne Verstellung, deaktiviert ist.

Das verbesserte Messkonzept wird schließlich auch durch ein elektrisch verstellbares Möbelstück mit wenigstens einem Aktuator zur Verstellung einer verstellbaren Komponente des Möbelstücks, mit einer Steuerung zur Ansteuerung des wenigstens einen Aktuators und mit wenigstens einer Sensorbaugruppe gemäß einer der zuvor beschriebenen Ausführungsformen umgesetzt. Die Möglichkeit der Integration der Sensorbaugruppe in den Aktuator und/oder in die Steuerung ist dabei mit eingeschlossen. Die Sensorbaugruppe ist dabei derart in dem Möbelstück angeordnet, dass das Blendenelement eine Verformung oder Bewegung der verstellbaren Komponente in eine Änderung der Position des Blendenelements relativ zur Lichtstrecke umsetzt.

Weitere Ausgestaltungen des Aktuators, der Steuerung und des Möbelstücks ergeben sich unmittelbar aus Kombinationen der verschiedenen Ausführungsformen der Sensorbaugruppe wie weiter oben beschrieben.

Das verbesserte Messkonzept wird auch durch ein Verfahren zum Betreiben eines elektrisch verstellbaren Möbelstücks umgesetzt. Ein solches Möbelstück ist mit wenigstens einem Aktuator zur Verstellung einer verstellbaren Komponente des Möbelstücks und mit wenigstens einer Sensorbaugruppe ausgestattet. Die wenigstens eine Sensorbaugruppe weist einen Lichtsender und einen Lichtempfänger, die über eine optische Lichtstrecke miteinander verbunden sind sowie ein Blendenelement auf. Das Blendenelement ist für eine zumindest teilweise Abdeckung der Lichtstrecke eingerichtet und bezüglich der Lichtstrecke derart beweglich gelagert, dass eine Änderung einer Position des Blendenelements in einer Änderung der Abdeckung der Lichtstrecke resultiert.

Gemäß dem Verfahren erfolgt ein Aussenden einer ersten Lichtmenge von dem Lichtsender über die Lichtstrecke zu dem Lichtempfänger. Mit dem Lichtempfänger wird ein Empfangssignal basierend auf einer über die Lichtstrecke empfangenen zweiten Lichtmenge erzeugt. Eine Verformung oder Bewegung der verstellbaren Komponente wird in eine Änderung der Position des Blendenelements relativ zur Lichtstrecke umgesetzt, beispielsweise durch Kraftübertragung von der Komponente. Die erste Lichtmenge wird durch ein Stellsignal geregelt, welches aus einer Minimierung einer Differenz zwischen dem Empfangssignal und einem Referenzsignal resultiert. Ein Verformungssignal wird basierend auf dem Stellsignal oder auf einem vom Stellsignal abgeleiteten Signal erzeugt. Basierend auf dem Verformungssignal, insbesondere basierend auf einer Änderung des Verformungssignals, wird eine Kollision der verstellbaren Komponente erkannt. Bei einer erkannten Kollision wird eine Bewegung des wenigstens einen Aktuators angehalten. Alternativ oder zusätzlich wird in diesem Fall eine Bewegungsrichtung des wenigstens einen Aktuators umgeschaltet.

Weiterbildungen des Verfahrens ergeben sich unmittelbar aus den verschiedenen Ausführungsformen der Sensorbaugruppe, des Aktuators, der Steuerung und des Möbelstücks, die zuvor ausführlich beschrieben wurden. Dies betrifft insbesondere die Erzeugung, Verarbeitung und Auswertung der verschiedenen verwendeten Signale.

Im Folgenden wird die Erfindung anhand beispielhafter Ausführungsformen unter Bezugnahme auf die Zeichnungen im Detail erläutert. Bauteile, die funktionell identisch sind oder einen identischen Effekt haben, können mit identischen Bezugszeichen versehen sein. Identische Bauteile oder Bauteile mit identischer Funktion sind unter Umständen nur bezüglich der Figur erklärt, in der sie zuerst erscheinen. Die Erklärung wird nicht notwendigerweise in den darauffolgenden Figuren wiederholt.

Es zeigen:
Figur 1 ein Ausführungsbeispiel eines Möbelsystems mit einem elektrisch verstellbaren Möbelstück in Form eines Tisches;
Figuren 2A, 2B und 2C verschiedene Darstellungen eines Beispiels einer Ausführungsform einer Sensorbaugruppe gemäß dem verbesserten Messkonzept;
Figur 3 verschiedene Beispiele von möglichen Ausführungsformen eines Querschnitts eines Blendenelements;
Figuren 4A und 4B Beispiele von Detaildarstellungen der Sensorbaugruppe;
Figur 5 ein Beispiel eines Blockschaltbilds einer Signalverarbeitung in der Sensorbaugruppe gemäß dem verbesserten Messkonzept;
Figuren 6A, 6B und 6C verschiedene Darstellungen eines weiteren Beispiels einer Ausführungsform einer Sensorbaugruppe gemäß dem verbesserten Messkonzept;
Figuren 7A, 7B, 7C verschiedene Darstellungen eines weiteren Beispiels einer Ausführungsform einer Sensorbaugruppe gemäß dem verbesserten Messkonzept;
Figur 8 ein Ausführungsbeispiel eines Aktuators mit einer Sensorbaugruppe gemäß dem verbesserten Messkonzept;
Figur 9 ein weiteres Ausführungsbeispiel eines Aktuators mit einer Sensorbaugruppe gemäß dem verbesserten Messkonzept;
Figur 10 ein weiteres Ausführungsbeispiel eines Aktuators mit einer Sensorbaugruppe gemäß dem verbesserten Messkonzept;
Figuren 11A, 11B, 11C und 11D verschiedene Darstellungen eines Beispiels einer Ausführungsform einer Sensorbaugruppe gemäß dem verbesserten Messkonzept an einem Tisch;
Figuren 12 und 13 ein weiteres Ausführungsbeispiel einer Sensorbaugruppe gemäß dem verbesserten Messkonzept;
Figur 14 ein Ausführungsbeispiel eines Möbelsystems mit einem elektrisch verstellbaren Möbelstück in Form eines Betts; und
Figur 15 ein Ausführungsbeispiel eines Möbelsystems mit einem elektrisch verstellbaren Möbelstück in Form eines Liegesessels.

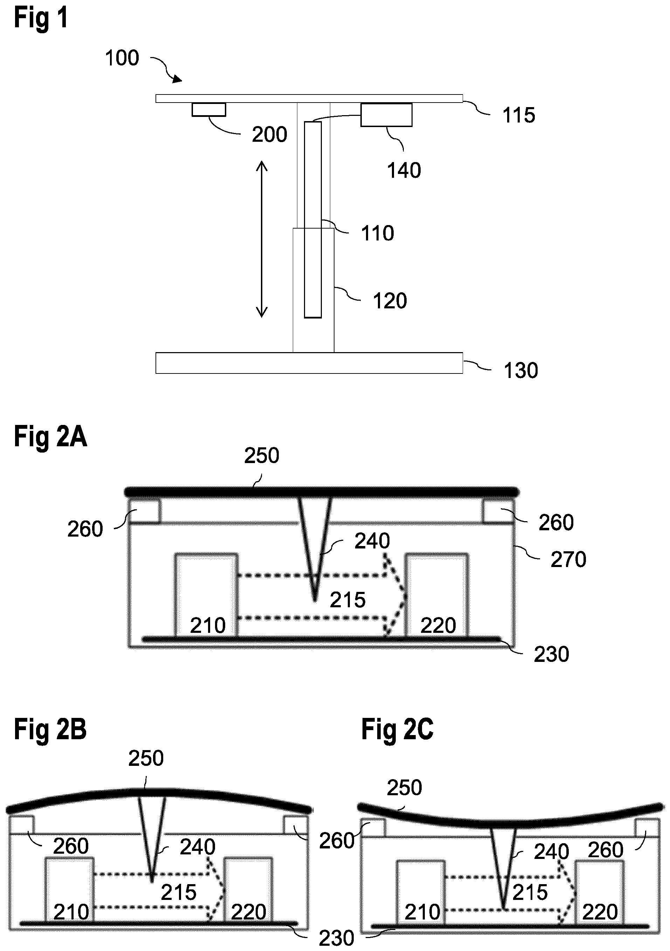

Figur 1 zeigt ein Ausführungsbeispiel eines Möbelsystems mit einem elektrisch verstellbaren Möbelstück in Form eines Tisches 100. Der Tisch 100 ist beispielsweise als höhenverstellbarer Tisch, insbesondere Bürotisch, ausgeführt, wobei eine Tischplatte 115 über einen Aktuator 110, der in einem Tischrahmen 120 angeordnet ist, in der Höhe verstellt werden kann. Die Ansteuerung des Aktuators 110 erfolgt beispielsweise über eine Steuerung 140. Der Tischrahmen 120 ist beispielsweise als Teleskopsäule ausgeführt. Der Tisch 100 umfasst ferner einen Tischfuß 130.

An der Tischplatte 115 ist zudem eine Sensorbaugruppe 200 angebracht, über die eine Krafteinwirkung auf die Tischplatte 115 detektiert werden kann, wobei die Krafteinwirkung eine Verformung der Tischplatte 115 zur Folge hat und diese Verformung von der Sensorbaugruppe erfasst wird. Eine mögliche Anwendung einer solchen Sensorbaugruppe 200 ist beispielsweise die Erfassung einer Krafteinwirkung wegen einer Kollision der Tischplatte 115 mit einem anderen Gegenstand oder Körper.

Die Sensorbaugruppe 200 weist insbesondere eine nicht dargestellte Kommunikationsverbindung zur Steuerung 140 auf, um entsprechende Signale zu übertragen. Diese kann drahtgebunden oder drahtlos sein. Abweichend von der Darstellung in der Figur 1 kann die Sensorbaugruppe 200 auch in der Steuerung 140 integriert sein.

Die Funktion und Wirkungsweise der Sensorbaugruppe 200 wird im Detail anhand der folgenden Figuren näher erläutert. Beispielsweise zeigen Figur 2A, Figur 2B und Figur 2C verschiedene Zustände, insbesondere Verformungszustände einer Sensorbaugruppe, die in einem Möbelstück angewendet werden kann.

Mit Verweis auf Figur 2A ist dort eine beispielhafte Ausführungsform einer Sensorbaugruppe dargestellt, welche eine Leiterplatte 230 beinhaltet, auf der sich ein Lichtsender 210 und ein Lichtempfänger 220 befinden, die über eine Lichtstrecke 215 optisch miteinander verbunden sind. Lichtsender 210 und Lichtempfänger 220 können auch ohne Leiterplatte 230 in der Sensorbaugruppe angeordnet sein. In die Lichtstrecke 215 hinein ragt ein Blendenelement 240, das in dieser Ausführungsform fest mit einer Komponente 250 verbunden ist. Über Befestigungen 260 ist ein Gehäuse 270 der Sensorbaugruppe an der Komponente 250 montiert. Die Komponente 250 ist insbesondere eine verstellbare Komponente eines Möbelstücks, welche sich bei einem Verstellvorgang, insbesondere bei einer Kollision während eines Verstellvorgangs, verformen kann.

Während in Figur 2A die Sensorbaugruppe in einem Ruhezustand dargestellt ist, ist in Figur 2B die Komponente 250 etwas nach außen gewölbt, sodass das Blendenelement 240 weniger weit in die Lichtstrecke 215 hineinragt. Umgekehrt ist in der Darstellung der Figur 2C die Komponente 250 nach unten gewölbt, sodass das Blendenelement 240 weiter in die Lichtstrecke 215 hineinragt.

Die dargestellte Anordnung führt dazu, dass das Blendenelement 240 in Abhängigkeit der Verformung mehr oder weniger Licht zwischen Lichtsender 210 und Lichtempfänger 220 über die Lichtstrecke 215 passieren lässt.

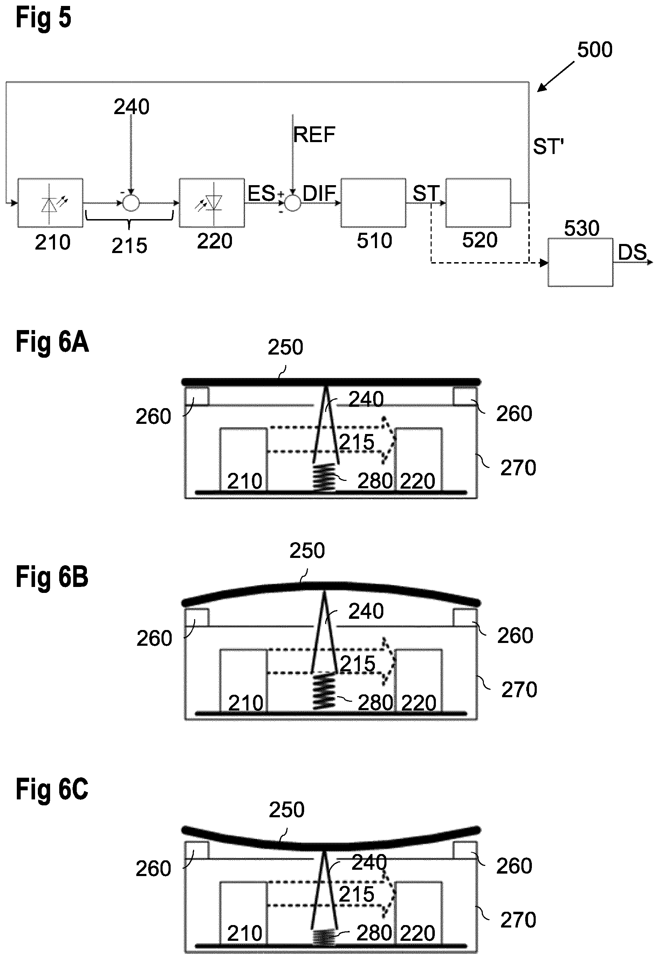

Durch einen hier nicht dargestellten Regelkreis, der in Zusammenhang mit Figur 5 erläutert wird, wird in der Sensorbaugruppe sichergestellt, dass trotz unterschiedlicher Abdeckung der Lichtstrecke 215 am Lichtempfänger 220 immer die gleiche Lichtmenge ankommt, in dem die Lichtmenge, die der Lichtsender 210 ausstrahlt, angepasst wird. Beispielsweise führt eine höhere Abdeckung der Lichtstrecke 215 zu einer erhöhten ausgestrahlten Lichtmenge, und umgekehrt.

Die Komponente 250 ist beispielsweise durch die Tischplatte 115 gebildet. Im Betrieb des Tisches aus Figur 1 kann es grundsätzlich zu Kollisionen mit einem anderen Gegenstand oder Körper kommen, welche eine Verformung der Tischplatte bewirken. Beispielsweise könnte eine Verformung der Tischplatte nach oben dazu führen, dass mehr Licht empfangen wird, was in einer Reduzierung der emittierten Lichtmenge resultiert. Eine Verformung nach unten würde zu einer kleineren empfangenen Lichtmenge führen, wodurch die emittierte Lichtmenge vergrößert wird. Je nach mechanischer Anordnung des Blendenelements 240 könnten die Verhältnisse auch umgekehrt sein.

Wenn man die Menge der aktuell emittierten Lichtmenge bestimmt, hat man ein relatives Maß für die aktuelle Abdeckung der Lichtstrecke 215 durch das Blendenelement 240 beziehungsweise für die Verformung beziehungsweise für die Krafteinwirkung. Die Distanz zwischen Lichtsender 210 und Lichtempfänger 220 ist gering, beispielsweise kleiner als 2 cm, insbesondere kleiner als 1 cm. Lichtsender 210 und Lichtempfänger 220 arbeiten beispielsweise im Infrarotlichtbereich.

In verschiedenen Ausführungsformen weist die Leiterplatte 230 unter der Lichtstrecke 215 eine Öffnung auf, durch die das Blendenelement 240 durchgeführt werden kann. Wie schematisch dargestellt, bewegt sich das Blendenelement 240 vorzugsweise senkrecht zur Lichtstrecke 215 beziehungsweise zur Oberfläche der Leiterplatte 230. Falls notwendig, können auch Abweichungen im Bereich von 5° bis 10° möglich sein. Damit bildet die Lichtstrecke 250 beziehungsweise die dazu parallele Leiterplatte 230 eine Art Referenzlinie, auf die sich die Verformung bezieht.

Die Lichtübertragung über die Lichtstrecke 215 von dem Lichtsender 210 zum Lichtempfänger 220 basiert auf einer direkten optischen Übertragung und ist insbesondere nicht auf Reflektoren oder dergleichen angewiesen, die Streulicht von der Lichtstrecke 215 einfangen oder auf andere Weise Licht von dem Lichtsender 210 zum Lichtempfänger 220 leiten. Ebenso wird auf den Einsatz eines oder mehrerer Lichtwellenleiter verzichtet.

Die Form des Blendenelements 240 kann unterschiedlich gewählt werden. Beispielsweise weist das Blendenelement 240 die Form eines Kegels, eines Kegelstumpfs, einer Pyramide, eines Pyramidenstumpfs, eines Zylinders, eines Quaders, eines Zapfens oder einer Form auf, die aus mehreren der genannten Formen zusammengesetzt ist.

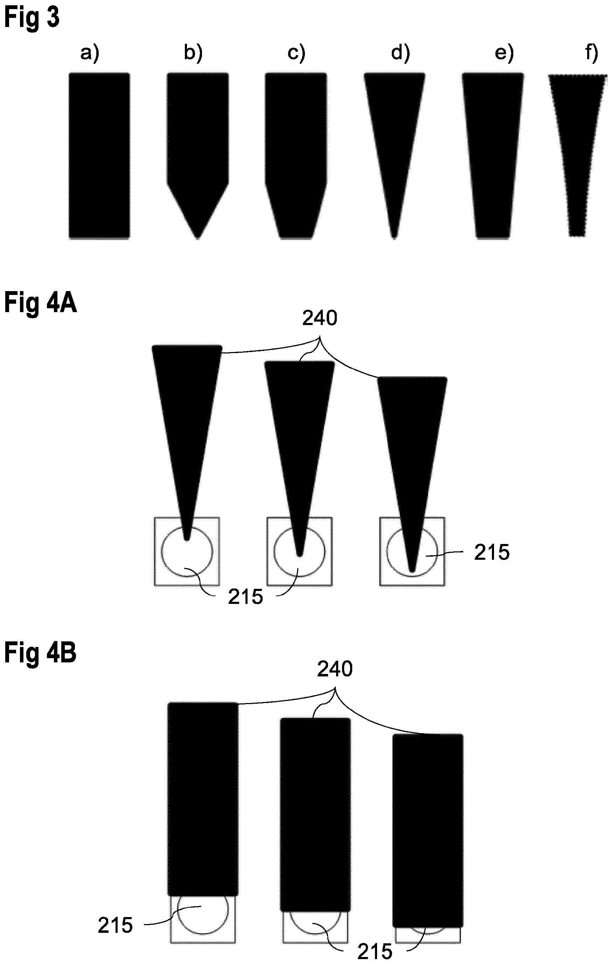

In Abhängigkeit von der Form des Blendenelements 240 ergibt sich ein Querschnitt beziehungsweise eine Querschnittsfläche des Blendenelements 240, die sich senkrecht zur Lichtstrecke 215 ergibt. Mit Verweis auf Figur 3 sind dort verschiedene Querschnittsflächen für die Lichtblende in einer nicht abschließenden Aufzählung dargestellt. Die Fläche unter a) bildet ein Rechteck. Die Fläche unter b) ist gebildet aus einem Rechteck und einer dreieckigen Spitze. In ähnlicher Weise ist die Fläche unter c) gebildet durch ein Rechteck mit einer trapezförmigen Spitze. Die Fläche unter d) weist eine Dreiecksform auf. Die Fläche unter e) weist eine Trapezform auf. Die Fläche unter f) weist eine Trichterform auf. Andere, nicht dargestellte Formen bzw. Teilformen sind etwa ein Kreissegment oder ein Ellipsensegment. Beispielsweise ist die Querschnittsfläche durch die Kombination eines Rechtecks mit einer Halbkreisform gebildet, ohne andere Kombinationsmöglichkeiten auszuschließen.

In den Figuren 4A und 4B sind jeweils Ansichten der Lichtstrecke 215 in Draufsicht zusammen mit einer Querschnittsfläche des Blendenelements 240 dargestellt, wobei jeweils drei verschiedene Abdeckungsgrade gezeigt sind.

In Figur 4A weist die Querschnittsfläche des Blendenelements 240 eine dreieckige oder trapezförmige Form auf, sodass bei einem Hineinbewegen des Blendenelements 240 in die Lichtstrecke 215 die Lichtstrecke 215 nicht plötzlich unterbrochen wird. Vielmehr ändert sich die empfangene Lichtmenge stufenlos, je weiter der Kegel des Blendenelements 240 in die Lichtstrecke geführt wird. Dies bewirkt, dass Fertigungstoleranzen des Blendenelements 240 oder die Lage der Lichtstrecke 215 in Bezug auf das Blendenelement 240 weniger kritisch sind.

In der Darstellung der Figur 4B weist das Blendenelement 240 eine rechteckige Querschnittsfläche auf, welche je nach Grad der Abdeckung der Lichtstrecke 215 zu einer recht plötzlichen Unterbrechung der Lichtstrecke 215 führen kann. Zudem können kleine Bewegungen des Blendenelements 240 zu relativ großen Änderungen der empfangenen Lichtmenge führen. Dies kann dazu führen, dass Fertigungstoleranzen sehr genau eingehalten werden müssen, um ein zu empfindliches Reagieren zu vermeiden. Allerdings ist eine solche Implementierung dennoch nicht ausgeschlossen.

Unabhängig von der Form der Querschnittsfläche wird beispielsweise die Lage des Blendenelements 240 in der Lichtstrecke 215 so gewählt, dass ohne Krafteinwirkung, also in einem Ruhezustand, die emittierte Lichtmenge um einen vordefinierten Faktor größer ist als die empfangene Lichtmenge, beispielsweise ungefähr doppelt so groß. Dies entspricht mit Verweis auf Figur 4A und Figur 4B beispielsweise der jeweils mittleren Abdeckungsvariante.

Mit Verweis auf Figur 5 ist dort ein Beispiel eines Blockschaltbilds 500 des Regelkreises der Sensorbaugruppe 200 dargestellt. Zentrale Elemente sind dabei der Lichtsensor 210 und der Lichtempfänger 220, der zur Abgabe eines Empfangssignals ES basierend auf einer empfangenen Lichtmenge eingerichtet ist. Die Lichtstrecke 215 ist dargestellt als Verbindung zwischen Lichtsensor 210 und Lichtempfänger 220 mit einem zusätzlichen Differenzglied, welches die Abdeckung durch das Blendenelement 240 berücksichtigt. Das Empfangssignal ES wird mit einem Referenzsignal REF verglichen, um eine Regelabweichung DIF zu bestimmen, die einem Regler 510 zugeführt wird. Der Regler 510 erzeugt daraus ein Stellsignal ST, welches einem Stellglied 520 zugeführt wird, welches wiederum ein Ansteuersignal ST' erzeugt, mit dem die von dem Lichtsender 210 abgegebene Lichtmenge kontrolliert wird.

Beispielsweise sind der Lichtsender 210 als Fotodiode und der Lichtempfänger 220 als Fototransistor ausgebildet, sodass mit dem Ansteuersignal ST' beispielsweise der Strom durch die Fotodiode definiert wird. Die Helligkeitssteuerung von Leuchtdioden oder anderen lichtemittierenden Elementen ist hinreichend bekannt und wird daher an dieser Stelle nicht näher ausgeführt. Wesentlicher Gedanke ist lediglich, die empfangene Lichtmenge beziehungsweise das resultierende Empfangssignal ES konstant zu halten.

Das Blockschaltbild 500 enthält zudem einen Verarbeitungsblock 530, welcher aus dem Stellsignal ST oder dem Ansteuerungssignal ST' ein Verformungssignal DS erzeugt. Beispielsweise weist das Verarbeitungselement 530 eine Kombination aus Verstärkung und Filterung auf, die das Stellsignal ST oder dem Ansteuerungssignal ST' so aufbereiten, dass es zuverlässiger auswertbar ist.

Das Stellsignal ST dient beispielsweise als Maß für den Grad der Verformung beziehungsweise die Krafteinwirkung auf die verstellbare Komponente beziehungsweise die Position oder Positionsänderung des Blendenelements 240.

Als Filter kommt typischerweise ein Bandpass zum Einsatz, um einerseits hochfrequente Störsignale auszufiltern, die nichts mit der Krafteinwirkung zu tun haben, und um andererseits tieffrequente langsame Signaländerungen zu unterdrücken, die nicht von einer Kraftänderung aufgrund einer Kollision verursacht werden.

Um das Stellsignal ST bzw. Ansteuerungssignal ST' im Hinblick auf die Erfassung der Änderung der Krafteinwirkung zu optimieren, kann im Block 530 auch ein Differentiator zum Einsatz kommen. Da ein Differentiator auch eine Hochpasswirkung hat, kann anstelle eines Bandpassfilters auch ein Tiefpassfilter in Kombination mit dem Differentiator insgesamt ein Bandpassverhalten erreichen.

Mit einem Differentiator kann insbesondere erreicht werden, dass Signaländerungen im Stellsignal ST besser im Signalverlauf sichtbar und damit leichter auswertbar sind, weil der Differentiator aus schnellen Spannungsänderungen an seinem Eingang impulsartige Signalverläufe am Ausgang erzeugen kann.

Filter, Verstärker und Differentiator sind nicht nur als sequentiell angeordnete, einzelne Schaltungsgruppen zu sehen, sondern können auch beispielsweise mit Operationsverstärkerschaltungen zumindest teilweise oder vollständig kombiniert werden.

In den Figuren 6A, 6B und 6C ist eine alternative Ausgestaltung der Sensorbaugruppe in verschiedenen Verformungszuständen dargestellt, ähnlich wie in den Figuren 2A, 2B und 2C. Im Unterschied zu dort ist das Blendenelement 240 nicht starr an der Komponente 250 befestigt, sondern elastisch in der Sensorbaugruppe gelagert, insbesondere auf der Leiterplatte 230. Die elastische Lagerung ist in den Figuren 6A, 6B und 6C über ein Federelement dargestellt, welches aber anstelle mit einer Spiralfeder auch mit anderen elastischen Körpern ausgeführt werden kann.

Eine Kraftübertragung zwischen der Komponente 250 und dem Blendenelement 240 erfolgt in diesen Ausführungsformen ausschließlich über die Berührung der beiden Elemente. Im Übrigen bewirkt eine Verformung der Komponente 250 wiederum eine Änderung der Position des Blendenelements 240 und damit eine Veränderung des Grads der Abdeckung der Lichtstrecke 215. Durch die andere Befestigung des Blendenelements 240 ist allerdings, mit Verweis auf Figur 6B, bei einer Wölbung der Komponente 250 nach außen der Grad der Abdeckung erhöht, sodass die Lichtmenge, die vom Sender 210 abgegeben werden muss, erhöht ist. Umgekehrt ist mit Verweis auf Figur 6C bei einer Wölbung der Komponente 250 nach unten der Grad der Abdeckung der Lichtstrecke 215 durch das Blendenelement 240 reduziert, sodass die vom Lichtsender 210 abgegebene Lichtmenge reduziert werden kann.

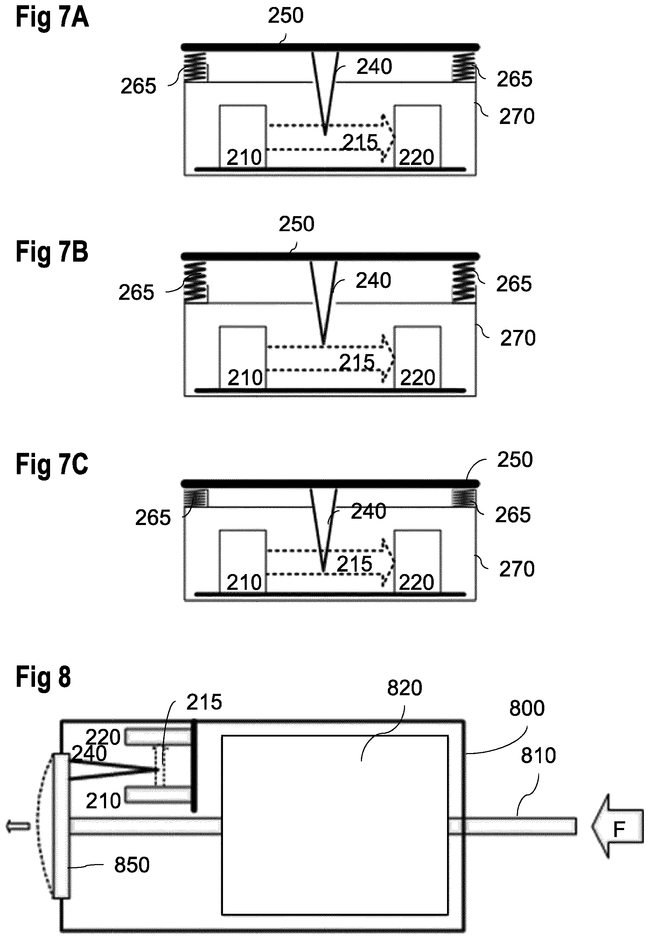

In den Figuren 7A, 7B und 7C ist eine weitere Ausführungsform der Sensorbaugruppe dargestellt, welche wiederum alternativ zu den Ausführungsformen in Figur 2A, 2B und 2C beziehungsweise Figur 6A, 6B und 6C ist. Auch hier stellen die einzelnen Figuren 7A, 7B und 7C unterschiedliche Belastungszustände dar.

In der dargestellten Ausführungsform ist das Gehäuse 270 der Sensorbaugruppe über elastische oder federnde Befestigungsmittel 265 an der Komponente 250 befestigt. Das Blendenelement 240 ist ähnlich wie in den Figuren 2A, 2B und 2C starr an der Komponente 250 befestigt. Bei einer Bewegung der Komponente 250 durch entsprechende Krafteinwirkung ändert sich der Grad der Abdeckung der Lichtstrecke 215.

In den verschiedenen Ausführungsformen ist die Sensorbaugruppe jeweils mit einem eigenen Gehäuse 270 dargestellt. Dies ermöglicht, dass die Sensorbaugruppe unabhängig von der Steuerung am Möbelstück platziert werden kann, insbesondere an der verstellbaren Komponente, um die dortige Krafteinwirkung beziehungsweise Verformung oder Bewegung zu detektieren. Bei Bedarf ist es auch möglich, mehrere solcher Sensorbaugruppen mit jeweils eigenem Gehäuse an einem Möbelstück anzubringen. Das kann sinnvoll sein, um die Erfassungsgenauigkeit bei einer größeren verstellbaren Komponente zu erhöhen, an der wenigstens zwei Sensorbaugruppen montiert sind. Alternativ oder zusätzlich kann das sinnvoll sein, wenn das Möbelstück mehrere verschiedene verstellbare Komponenten aufweist, an denen jeweils wenigstens eine Sensorbaugruppe montiert ist.

Alternativ kann die Sensorbaugruppe auch direkt in ein Gehäuse der Steuerung integriert sein. Dabei ist die Lichtstrecke 215 mit Lichtsender 210 und Lichtempfänger 220 beispielsweise unmittelbar auf einer Platine der Steuerung vorgesehen. Dies kann insbesondere bei einer Steuerung für einen elektrisch höhenverstellbaren Tisch günstig sein, welche beispielsweise an der höhenverstellbaren Tischplatte montiert ist.

Figur 8 zeigt eine beispielhafte Ausführungsform eines Aktuators, insbesondere eines Linearaktuators 800, bei dem die Sensorbaugruppe in einem Gehäuse des Aktuators angeordnet ist. Der Aktuator 800 weist beispielsweise eine Antriebswelle 810 auf, die von einem Elektromotor 820 angetrieben wird und über ein Lagerschild 850 in einem Gehäuse des Aktuators gelagert wird. Der Elektromotor 820 kann ein Getriebe enthalten. Abtriebsseitig, also in der Abbildung der Figur 8 auf der rechten Seite, können beliebige herkömmliche Mechaniken angeschlossen werden, um die Drehbewegung des Motors beispielsweise in eine Längsbewegung umzusetzen, oder dergleichen.

Im Betrieb des Aktuators 800 wirkt üblicherweise eine Kraft F, dargestellt mit dem Pfeil auf der rechten Seite, in axialer Richtung der Antriebswelle 810 und damit auch auf das Lagerschild 850. Das Blendenelement 240 ist in dieser Ausführungsform starr mit dem Lagerschild verbunden. Das Lagerschild 850 selbst weist beispielsweise eine gewisse Elastizität auf oder ist elastisch im Gehäuse gelagert. Dadurch sind Ähnlichkeiten bzw. Analogien zu der Ausführungsform, die in den Figuren 7A, 7B und 7C dargestellt ist, gegeben. Insbesondere wird bei einer Verformung oder Bewegung des Lagerschilds 850 das Blendenelement 240 mehr oder weniger tief in die Lichtstrecke 215 eingeführt, woraus sich nach dem zuvor beschriebenen Prinzip wiederum ein Verformungssignal ermitteln lässt.

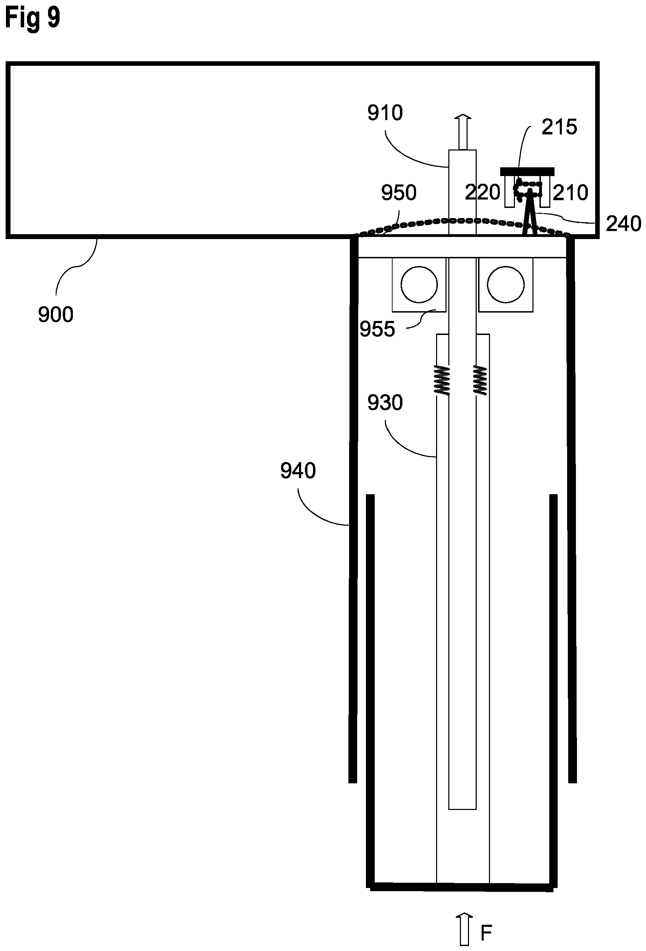

Figur 9 zeigt eine weitere beispielhafte Ausführungsform eines Aktuators in Form eines Linearaktuators 900, der in Abweichung von der zuvor beschriebenen Ausführungsform als Winkelantrieb ausgebildet ist. Motor und Winkelgetriebe sind aus Gründen der Übersicht nicht dargestellt. Sichtbar ist die Verstellmechanik 930 mit einer Spindel, die von einer Antriebswelle 910 angetrieben wird. Die Verstellmechanik 930 ist von einem teleskopartigen Gehäuse 940 umgeben. Ferner weist der Aktuator 900 ein Lagerschild 950 mit einem beispielhaft als Kugellager dargestellten Lager 955 auf. Das Blendenelement 240 ist auch in dieser Ausführungsform starr mit dem Lagerschild 950 verbunden. Das Lagerschild 950 selbst weist beispielsweise eine gewisse Elastizität auf oder ist elastisch im Gehäuse gelagert.

Ähnlich wie bei der Ausführungsform der Figur 8 wirkt im Betrieb des Aktuators 900 üblicherweise eine Kraft F, dargestellt mit dem Pfeil an der Unterseite des Gehäuses 940, in axialer Richtung der Antriebswelle 910 und damit auch auf das Lagerschild 950. Wiederum wird bei einer Verformung oder Bewegung des Lagerschilds 950 das Blendenelement 240 mehr oder weniger tief in die Lichtstrecke 215 eingeführt, woraus sich nach dem zuvor beschriebenen Prinzip ein Verformungssignal ermitteln lässt.

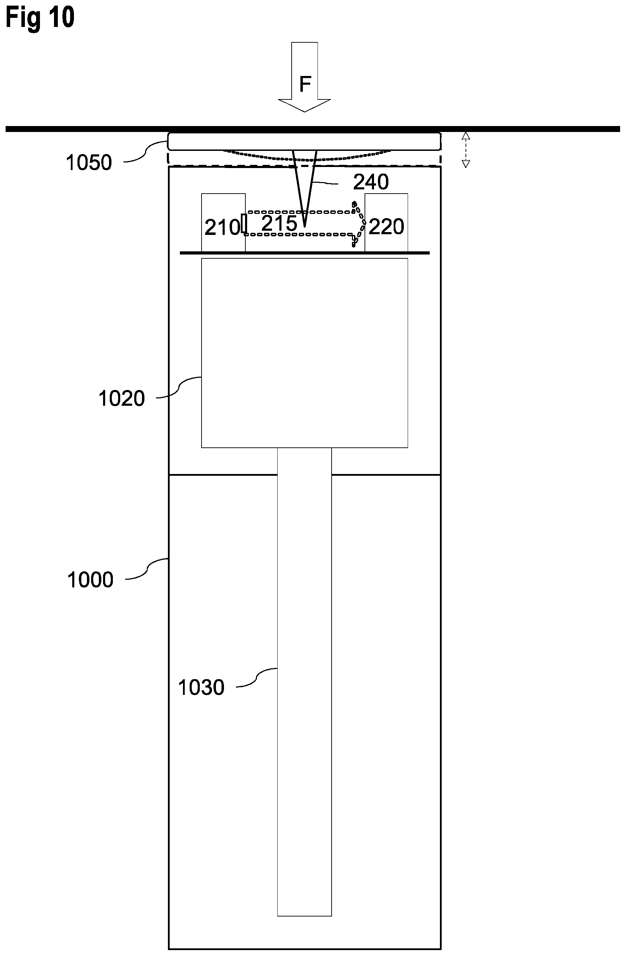

Figur 10 zeigt eine weitere beispielhafte Ausführungsform eines Aktuators in Form eines Linearaktuators 1000. Der Linearaktuator 1000 weist unter anderen einen Elektromotor 1020 mit oder ohne Getriebe und eine als Spindel dargestellte Verstellmechanik 1030 zur Bewirkung der Längenänderung des Aktuators 1000 auf. Abweichend von der Ausführungsform der Figur 8 ist das Blendenelement 240 an einem elastischen Element 1050 angebracht, welches formschlüssig mit einer Komponente des verstellbaren Möbelstücks, beispielsweise mit einer Tischplatte 115 oder dergleichen, sowie mit einer Oberseite des Aktuators 1000 verbunden ist.

Bei entsprechender Krafteinwirkung, dargestellt durch den Kraftpfeil F, kann das elastische Element 1050 komprimiert und/oder verformt werden, was letztendlich zu einer relativen Positionsänderung des Blendenelements 240 in Bezug auf die Lichtstrecke 215 führt. Beispielsweise ändert sich durch die Krafteinwirkung die Dicke des elastischen Elements 1050, was schematisch mit der schattierten bzw. der vollflächigen Füllung des elastischen Elements 1050 dargestellt ist. Zudem kann das elastische Element auch verbogen werden, um einer Verformung der Komponente zu folgen, was wiederum zu einer relativen Positionsänderung des Blendenelements 240 in Bezug auf die Lichtstrecke 215 führt. Das elastische Element 1050 kann auch als Dämpfer oder Puffer bezeichnet werden und ist beispielsweise mit einem gummiartigen Material ausgeführt.

Aus der Positionsänderung des Blendenelements 240 lässt sich nach dem zuvor beschriebenen Prinzip wiederum ein Verformungssignal ermitteln.

Die verschiedenen Ausführungsformen der Sensorbaugruppe lassen sich als individueller Einzelsensor, integriert in eine Steuerung oder integriert in einen Aktuator, in verschiedenen elektrisch verstellbaren Möbeln einsetzen. Als erstes Beispiel sei hier auf die in Figur 1 dargestellte Implementierung für einen elektrisch höhenverstellbaren Tisch verwiesen.

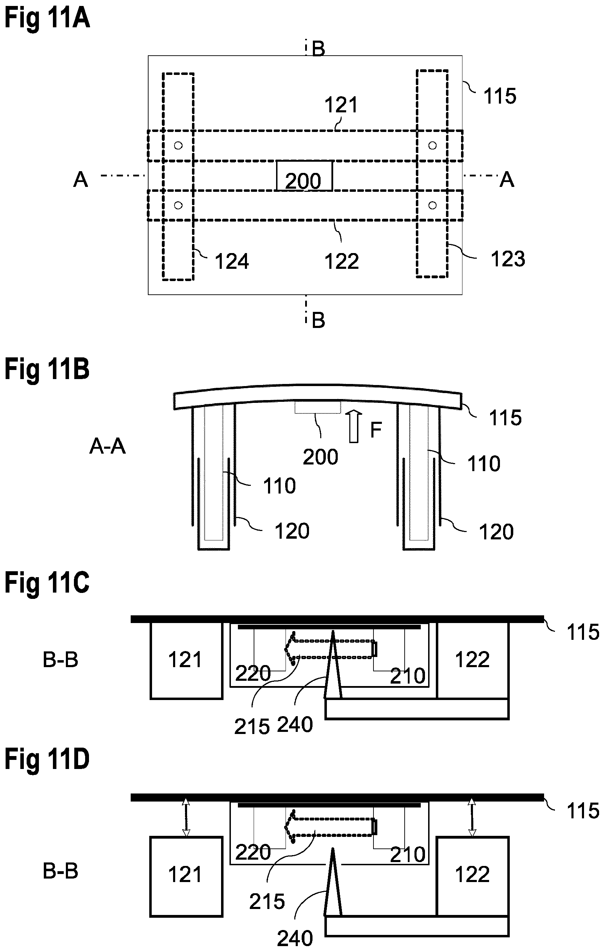

Beispielsweise zeigen die Figuren 11A, 11B, 11C und 11D verschiedene Ansichten einer weiteren Ausführungsform einer Sensorbaugruppe mit einem verstellbaren Möbelstück, welches hier durch einen Tisch gebildet ist. Abweichend von den zuvor beschriebenen Ausführungsformen wird bei dieser Ausführungsform die relative Bewegung zwischen Blendenelement 240 und Lichtstrecke 215 nicht mit einer starr angeordneten Lichtstrecke 215 und einem beweglichen Blendenelement 240 sondern mit einem starr angeordneten Blendenelement 240 und einer beweglichen Lichtstrecke 215 realisiert. Dazu im Einzelnen:
Figur 11A zeigt eine Draufsicht auf eine Tischplatte 115 eines höhenverstellbaren Tisches. Die Tischplatte 115 ist auf Querträgern 121, 122 sowie auf Längsträgern 123, 124 gelagert und beispielsweise an den Schnittpunkten der Träger 121-124 fest mit diesen verbunden, gekennzeichnet durch jeweilige Verbindungspunkte. Die Verbindung kann beispielsweise durch Schrauben erfolgen. Zwischen den Querträgern 121, 122 ist die Sensorbaugruppe 200 angebracht.
Figur 11B zeigt eine Seitenansicht des Tisches entlang der Schnittlinie A-A. Dabei ist die Tischplatte 115 durch eine Krafteinwirkung von unten verformt, nämlich nach oben gewölbt. Dies kann beispielsweise eintreten, wenn die Tischplatte 115 nach unten verfahren wird und auf ein Hindernis unter der Tischplatte 115 stößt.
Die Figuren 11C und 11D zeigen eine Seitenansicht des Tisches entlang der Schnittlinie B-B. Das Blendenelement 240 ist über eine entsprechende Halterung an einem der Querträger 121, 122 angebracht, vorliegend am Querträger 122.

Während die Figur 11C den Tisch im Ruhezustand darstellt, entspricht die Darstellung der Figur 11D einem Zustand wie beispielsweise in Figur 11B, bei dem die Tischplatte 115 im Bereich der Sensorbaugruppe 200 nach oben gewölbt ist und daher nicht mehr bündig auf den Trägern 121, 122 aufliegt.

Da die Sensorbaugruppe 200 an der Tischplatte 115 montiert ist, bewegt sich die Sensorbaugruppe 200 mit der Tischplatte 115 nach oben und verändert damit die Lage relativ gegenüber dem Blendenelement 240. In diesem Fall führt also eine Bewegung der Sensorbaugruppe 200 zu einer Veränderung der Position des Blendenelements 240.

Wenn die Tischplatte 115 durch Fahrt nach oben die Kollision mit dem Hindernis wieder löst, dann liegt sie aufgrund ihrer Elastizität bzw. der Schwerkraft wieder auf dem Längsträger auf.

Die Sensorbaugruppe 200 kann bei dieser Ausführungsform auch in die Steuerung des verstellbaren Möbelstücks integriert sein, sodass mit Verweis auf Figur 1 die Steuerung 140 mit integrierter Sensorbaugruppe 200 zwischen die Träger 121, 122 montiert wird.

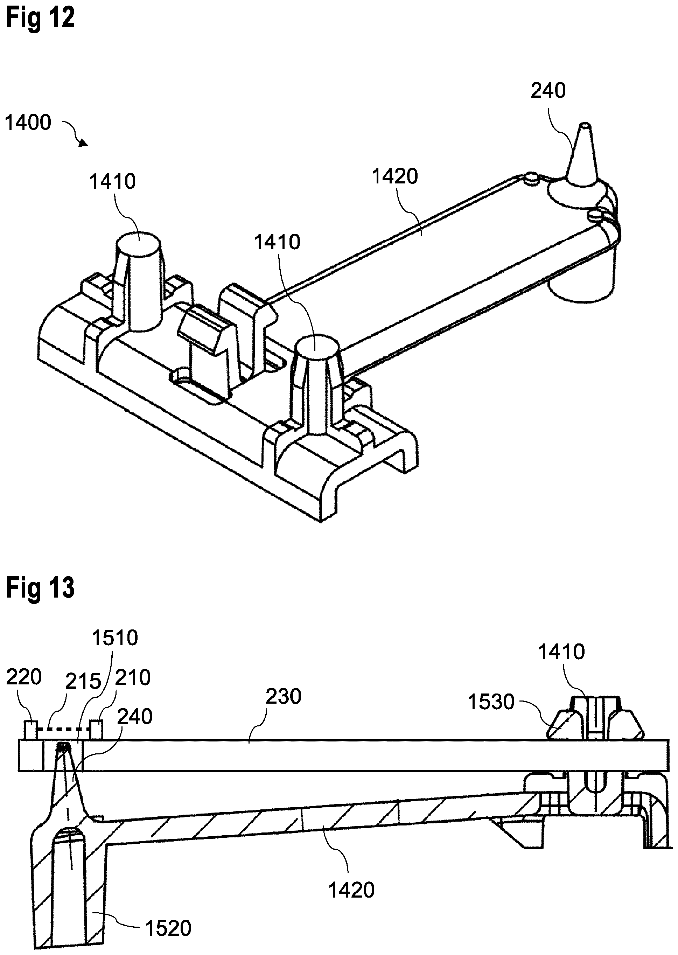

Figur 12 zeigt ein Ausführungsbeispiel einer Halterung 1400 einer Sensorbaugruppe 200 für die elastische Montage des Blendenelements 240 gemäß dem verbesserten Messkonzept. Die Halterung 1400 weist daher Zapfen 1410 auf, mit denen sie in entsprechende Befestigungslöcher 1530 in der Leiterplatte 230 eingesteckt wird. Damit kann sich die Position der Halterung 1400 zur Lichtschranke 215 auf der Leiterplatte 230 nicht verändern, sodass sichergestellt ist, dass das Blendenelement 240 sich stets zentral im Lichtstrahl befindet um eine korrekte Funktion sicherzustellen. Die Halterung besitzt des Weiteren einen elastischen Arm 1420, der am frei beweglichen, elastischen Ende das Blendenelement 240 aufweist.

Mit Bezug auf Figur 13 ist die Halterung 1400 auf der einen Seite der Leiterplatte 230 angebracht, die der Seite der Leiterplatte 230 mit der Lichtschranke 215 abgewandt ist. Das Blendenelement 240 ragt in die Lichtschranke 215 durch eine entsprechende Öffnung 1510 der Leiterplatte 230. Das dem Blendenelement gegenüberliegende zylindrische Teil 1520 der Halterung 1400 wird durch ein Gehäuse 270 der Sensorbaugruppe 200 nach außen geführt. Eine ausgeübte Kraft auf diesen zylindrischen Teil, etwa durch eine verstellbare Komponente 250 eines Möbelstücks, verursacht eine Änderung der Lage des Blendenelements 240 in der Lichtschranke 215. In Figur 13 ist die Lage des Blendenelements 240 gezeigt, wenn beispielsweise keine Kraft ausgeübt wird.

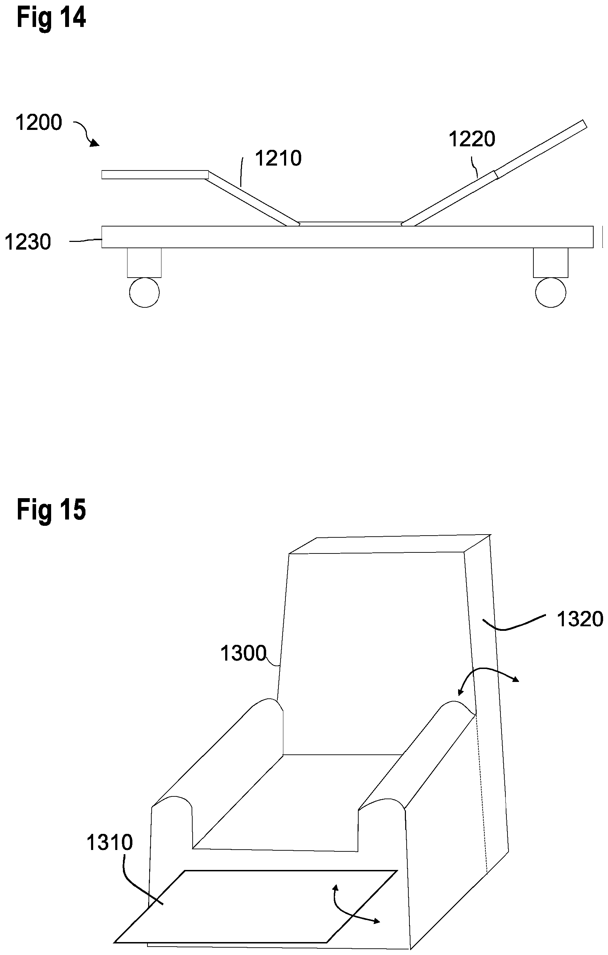

Eine weitere Möglichkeit ist beispielsweise die Implementierung in einem elektrisch verstellbaren Bett, wie es beispielsweise in Figur 14 dargestellt ist. Insbesondere ist in Figur 14 das Möbelstück als Bett 1200 ausgebildet, mit verstellbarem Fußteil 1210 und/oder verstellbarem Kopfteil 1220, die in einem Bettgestell oder Bettrahmen 1230 gelagert sind. Entsprechende Aktuatoren sind aus Übersichtsgründen nicht dargestellt. Ähnlich wie bei den zuvor beschriebenen Ausführungsformen können eine Steuerung 140 und eine oder mehrere Sensorbaugruppen 200 etwa in einem Rahmen oder Gestell des Betts 1200 oder in dem Fußteil 1210 oder Kopfteil 1220 angeordnet sein. Fußteil 1210 und/oder Kopfteil 1220 können mit Platten ausgebildet sein, auf denen eine oder mehrere Sensorbaugruppen 200 angeordnet sind. Solche Platten können beispielsweise eine Ausprägung der Komponente 250 darstellen. Beispielsweise lassen sich mit solchen Anordnungen Kollisionen einer Bewegung des Fußteils 1210 und/oder des Kopfteils 1220 detektieren, wobei die Sensorbaugruppen vorzugsweise an diesen Elementen angebracht sind.

Figur 15 zeigt eine weitere mögliche Ausgestaltung, bei dem das Möbelstück als verstellbarer Liegesessel 1300 ausgeführt ist. Beispielsweise weist der Liegesessel 1300 ein verstellbares Rückenteil 1320 und/oder ein verstellbares Fußteil 1310 auf. Entsprechende Sensorbaugruppen, über die eine Kollision erkannt werden kann, sind beispielsweise in oder an den verstellbaren Komponenten 1310, 1320 angebracht.

Der Einsatz der Sensorbaugruppe in anderen verstellbaren Möbelstücken ist nicht ausgeschlossen.

### Bezugszeichenliste

- 100: Tisch
- 110: Aktuator
- 115: Tischplatte
- 120: Tischrahmen
- 121,122,123,124: Träger
- 130: Tischfuß
- 140: Steuerung
- 200: Sensorbaugruppe
- 210: Lichtsender
- 215: Lichtstrecke
- 220: Lichtempfänger
- 230: Leiterplatte
- 240: Blendenelement
- 250: Komponente
- 260: Befestigung
- 265, 280: Federelement
- 270: Gehäuse
- 510: Regler
- 520: Stellglied
- 530: Verarbeitungsblock
- 800, 900, 1000: Aktuator
- 810, 910: Antriebswelle
- 820, 1020: Elektromotor
- 850, 950: Lagerschild
- 930, 1030: Verstellmechanik
- 940: Aktuatorgehäuse
- 955: Lager
- 1050: elastisches Element
- 1200: Bett
- 1210: Fußteil
- 1220: Kopfteil
- 1230: Bettgestell
- 1300: Liegesessel
- 1310: Fußteil
- 1320: Rückenteil
- 1400: Halterung
- 1410: Zapfen
- 1420: elastischer Arm
- 1510: Öffnung
- 1520: zylindrischer Teil
- 1530: Befestigungsloch

## Patentansprüche

1. Sensorbaugruppe für ein elektrisch verstellbares Möbelstück mit wenigstens einem Aktuator zur Verstellung einer verstellbaren Komponente des Möbelstücks und einer Steuerung zur Ansteuerung des wenigstens einen Aktuators, die Sensorbaugruppe aufweisend
- einen Lichtsender (210) und einen Lichtempfänger (220), die über eine optische Lichtstrecke (215) miteinander verbunden sind, wobei der Lichtempfänger (220) zur Abgabe eines Empfangssignals basierend auf einer empfangenen Lichtmenge eingerichtet ist;
- ein Blendenelement (240), das für eine zumindest teilweise Abdeckung der Lichtstrecke (215) eingerichtet ist, und das bezüglich der Lichtstrecke (215) derart beweglich gelagert ist, dass eine Änderung einer Position des Blendenelements (240) in einer Änderung der Abdeckung der Lichtstrecke (215) resultiert; **gekennzeichnet durch**
- eine Auswerteschaltung, die eingerichtet ist zum Regeln einer vom Lichtsender (210) abgegebenen Lichtmenge durch ein Stellsignal, das aus einer Minimierung einer Differenz zwischen dem Empfangssignal und einem Referenzsignal resultiert, und zum Erzeugen eines Verformungssignals basierend auf dem Stellsignal oder auf einem vom Stellsignal abgeleiteten Signal;
- wobei die Sensorbaugruppe eingerichtet ist für eine Montage in dem Möbelstück derart, dass das Blendenelement (240) eine Verformung oder Bewegung der verstellbaren Komponente in eine Änderung der Position des Blendenelements (240) relativ zur Lichtstrecke (215) umsetzt.

2. Sensorbaugruppe nach Anspruch 1,
bei der die Auswerteschaltung eine Filterstufe aufweist und eingerichtet ist zum Erzeugen des Verformungssignals durch Filterung des Stellsignals oder des vom Stellsignal abgeleiteten Signals mit der Filterstufe.

3. Sensorbaugruppe nach Anspruch 2,
bei der die Filterstufe als Tiefpassfilterstufe ausgebildet ist und der Tiefpassfilterstufe ein Differentiator nachgeschaltet ist, oder bei der die Filterstufe als Bandpassfilterstufe ausgebildet ist.

4. Sensorbaugruppe nach einem der Ansprüche 1 bis 3,
bei der die Lichtstrecke (215) als direkte optische Verbindung zur Übertragung von Licht von dem Lichtsender (210) zu dem Lichtempfänger (220) ausgebildet ist, insbesondere ohne die Nutzung von Reflektionen.

5. Sensorbaugruppe nach einem der Ansprüche 1 bis 4,
bei der das Blendenelement (240) für eine feste Montage an der verstellbaren Komponente zum Erzeugen der Änderung der Position des Blendenelements (240) relativ zur Lichtstrecke (215) eingerichtet ist.

6. Sensorbaugruppe nach einem der Ansprüche 1 bis 4,
bei der das Blendenelement (240) elastisch in der Sensorbaugruppe gelagert und zum Erzeugen der Änderung der Position des Blendenelements (240) relativ zur Lichtstrecke (215) über eine Berührung der Komponente eingerichtet ist.

7. Sensorbaugruppe nach einem der Ansprüche 1 bis 6,
bei der der Lichtsender (210) und der Lichtempfänger (220) auf einer gemeinsamen Leiterplatte (230) angeordnet sind.

8. Sensorbaugruppe nach Anspruch 7,
bei der die Lichtstrecke (215) parallel oder im Wesentlichem parallel zur Oberfläche der Leiterplatte (230) ist.

9. Sensorbaugruppe nach einem der Ansprüche 7 oder 8,
bei der die Leiterplatte (230) unterhalb der Lichtstrecke (215) eine Öffnung aufweist, wobei das Blendenelement (240) beweglich über und/oder in der Öffnung gelagert ist.

10. Aktuator für ein elektrisch verstellbares Möbelstück mit einer Steuerung zur Ansteuerung des wenigstens einen Aktuators, der Aktuator eingerichtet zur Verstellung einer verstellbaren Komponente des Möbelstücks und umfassend eine Sensorbaugruppe nach einem der Ansprüche 1 bis 9, wobei die Sensorbaugruppe in einem Gehäuse des Aktuators angeordnet ist und das Blendenelement (240) derart in dem Aktuator befestigt ist, dass eine Verformung oder Bewegung der verstellbaren Komponente über eine Verformung oder Bewegung eines Lagerschilds des Aktuators die Änderung der Position des Blendenelements (240) relativ zur Lichtstrecke (215) umsetzt.

11. Steuerung für ein elektrisch verstellbares Möbelstück mit wenigstens einem Aktuator zur Verstellung einer verstellbaren Komponente des Möbelstücks, die Steuerung umfassend eine Sensorbaugruppe nach einem der Ansprüche 1 bis 9, wobei die Steuerung zur Ansteuerung des wenigstens einen Aktuators eingerichtet und zur Montage an der verstellbaren Komponente vorgesehen ist, und wobei die Sensorbaugruppe in einem Gehäuse der Steuerung integriert ist.

12. Steuerung nach Anspruch 11 mit einer Sensorbaugruppe nach einem der Ansprüche 7 bis 9, bei der die Leiterplatte (230) der Sensorbaugruppe durch eine Leiterplatte der Steuerung gebildet ist.

13. Steuerung nach Anspruch 11 oder 12, bei der die Steuerung eingerichtet ist, basierend auf dem Verformungssignal, insbesondere basierend auf einer Änderung des Verformungssignals, eine Kollision zu erkennen und den wenigstens einen Aktuator bei einer erkannten Kollision anzuhalten und/oder eine Bewegungsrichtung des wenigstens einen Aktuators umzuschalten.

14. Elektrisch verstellbares Möbelstück mit wenigstens einem Aktuator zur Verstellung einer verstellbaren Komponente des Möbelstücks, mit einer Steuerung zur Ansteuerung des wenigstens einen Aktuators und mit wenigstens einer Sensorbaugruppe nach einem der Ansprüche 1 bis 9, wobei die wenigstens eine Sensorbaugruppe derart in dem Möbelstück montiert ist, dass das Blendenelement (240) eine Verformung oder Bewegung der verstellbaren Komponente in die Änderung der Position des Blendenelements (240) relativ zur Lichtstrecke (215) umsetzt.

15. Verfahren zum Betreiben eines elektrisch verstellbaren Möbelstücks mit wenigstens einem Aktuator zur Verstellung einer verstellbaren Komponente des Möbelstücks und mit wenigstens einer Sensorbaugruppe, die wenigstens eine Sensorbaugruppe aufweisend einen Lichtsender (210) und einen Lichtempfänger (220), die über eine optische Lichtstrecke (215) miteinander verbunden sind, sowie ein Blendenelement (240), das für eine zumindest teilweise Abdeckung der Lichtstrecke (215) eingerichtet ist, und das bezüglich der Lichtstrecke (215) derart beweglich gelagert ist, dass eine Änderung einer Position des Blendenelements (240) in einer Änderung der Abdeckung der Lichtstrecke (215) resultiert, das Verfahren umfassend:
- Aussenden einer ersten Lichtmenge von dem Lichtsender (210) über die Lichtstrecke (215) zu dem Lichtempfänger (220) ;
- Erzeugen, mit dem Lichtempfänger (220), eines Empfangssignals basierend auf einer über die Lichtstrecke (215) empfangenen zweiten Lichtmenge;
- Umsetzen einer Verformung oder Bewegung der verstellbaren Komponente in eine Änderung der Position des Blendenelements (240) relativ zur Lichtstrecke (215);
- Regeln der ersten Lichtmenge durch ein Stellsignal, das aus einer Minimierung einer Differenz zwischen dem Empfangssignal und einem Referenzsignal resultiert;
- Erzeugen eines Verformungssignals basierend auf dem Stellsignal oder auf einem vom Stellsignal abgeleiteten Signal;
- Erkennen, basierend auf dem Verformungssignal, insbesondere basierend auf einer Änderung des Verformungssignals, einer Kollision der verstellbaren Komponente; und
- Anhalten einer Bewegung des wenigstens einen Aktuators und/oder Umschalten einer Bewegungsrichtung des wenigstens einen Aktuators bei einer erkannten Kollision.

## Claims

1. A sensor assembly for an electrically adjustable piece of furniture with at least one actuator for adjusting an adjustable component of the piece of furniture and a control system for controlling the at least one actuator, the sensor assembly comprising
- a light transmitter (210) and a light receiver (220) coupled to each other via an optical light path (215), wherein the light receiver (220) is configured to provide a reception signal based on a received amount of light;
- an aperture element (240) which is configured to at least partially cover the light path (215) and which is mounted in a movable manner with respect to the light path (215) in such a way that a change in a position of the aperture element (240) results in a change in the covering of the light path (215); **characterized by**
- an evaluation circuit configured to control an amount of light emitted from the light transmitter (210) via a control signal that is generated based on minimizing a difference between the received signal and a reference signal, and to generate a deformation signal based on the control signal or on a signal derived from the control signal;
- wherein the sensor assembly is configured to be mounted in the piece of furniture such that the aperture element (240) converts a deformation or movement of the adjustable component into a change in the position of the aperture element (240) relative to the light path (215).

2. The sensor assembly according to claim 1, wherein the evaluation circuit comprises a filter stage and is configured to generate the deformation signal by filtering the control signal or the signal derived from the control signal using the filter stage.

3. The sensor assembly according to claim 2, wherein the filter stage is designed as a low-pass filter stage and a differentiator is connected downstream of the low-pass filter stage, or wherein the filter stage is designed as a band-pass filter stage.

4. The sensor assembly according to one of claims 1 to 3, wherein the light path (215) is a direct optical connection for transmitting light from the light transmitter (210) to the light receiver (220), in particular without the use of reflections.

5. The sensor assembly according to one of claims 1 to 4, wherein the aperture element (240) is adapted to be fixedly mounted to the adjustable component for producing the change in position of the aperture element (240) relative to the light path (215).

6. The sensor assembly according to one of claims 1 to 4, where the aperture element (240) is mounted elastically in the sensor assembly and is arranged to produce the change in position of the aperture element (240) relative to the light path (215) via touching of the component.

7. The sensor assembly according to one of claims 1 to 6, wherein the light transmitter (210) and the light receiver (220) are arranged on a common printed circuit board (230).

8. The sensor assembly according to claim 7, wherein the light path (215) is parallel or substantially parallel to the surface of the printed circuit board (230).

9. The sensor assembly according to claim 7 or 8, wherein the printed circuit board (230) has an opening below the light path (215), the aperture element (240) being mounted movably above and/or in the opening.

10. An actuator for an electrically adjustable piece of furniture with a control system for controlling the at least one actuator, the actuator being set up for adjusting an adjustable component of the piece of furniture and comprising a sensor assembly according to one of claims 1 to 9, wherein the sensor assembly is arranged in a housing of the actuator and the aperture element (240) is fixed in the actuator in such a way that a deformation or movement of the adjustable component via a deformation or movement of an end shield of the actuator converts the change in position of the aperture element (240) relative to the light path (215).

11. A control system for an electrically adjustable piece of furniture with at least one actuator for adjusting an adjustable component of the piece of furniture, the control comprising a sensor assembly according to one of claims 1 to 9, wherein the control is configured to control the at least one actuator and is configured to be mounting onto the adjustable component, and wherein the sensor assembly is integrated in a housing of the control.

12. The control system according to claim 11 with a sensor assembly according to one of claims 7 to 9, in which the printed circuit board (230) of the sensor assembly is formed by a printed circuit board of the control system.

13. The control according to claim 11 or 12, wherein the control system is configured to detect a collision based on the deformation signal, in particular based on a change in the deformation signal, and to stop the at least one actuator in the event of a detected collision and/or to switch over a direction of movement of the at least one actuator.

14. An electrically adjustable piece of furniture with at least one actuator for adjusting an adjustable component of the piece of furniture, with a control for controlling the at least one actuator and with at least one sensor assembly according to one of claims 1 to 9, wherein the at least one sensor assembly is mounted in the piece of furniture in such a way that the aperture element (240) converts a deformation or movement of the adjustable component into the change in position of the aperture element (240) relative to the light path (215).

15. A method for operating an electrically adjustable piece of furniture comprising at least one actuator for adjusting an adjustable component of the piece of furniture and at least one sensor assembly, the at least one sensor assembly having a light transmitter (210) and a light receiver (220) which are coupled to one another via an optical light path (215), as well as an aperture element (240) which is configured to at least partially cover the light path (215) and which is mounted in a movable manner with respect to the light path (215) in such a way that a change in a position of the aperture element (240) results in a change in the covering of the light path (215), the method comprising:
- transmitting a first quantity of light from the light transmitter (210) via the light path (215) to the light receiver (220);
- generating, by means of the light receiver (220), a reception signal based on a second amount of light received via the light path (215);
- converting a deformation or movement of the adjustable component into a change in the position of the aperture element (240) relative to the light path (215);
- controlling the first amount of light by means of a control signal that results from minimizing a difference between the reception signal and a reference signal;
- generation of a deformation signal based on the control signal or on a signal derived from the control signal;
- detecting, based on the deformation signal, in particular based on a change in the deformation signal, a collision of the adjustable component; and
- terminating a movement of the at least one actuator and/or switching a direction of movement of the at least one actuator in case of a detected collision.

## Revendications

1. Ensemble de capteurs pour un meuble réglable électriquement avec au moins un actionneur pour le réglage d'un composant réglable du meuble et une commande pour la commande de l'au moins un actionneur, l'ensemble de capteurs comprenant
- un émetteur de lumière (210) et un récepteur de lumière (220) qui sont reliés entre eux par un trajet lumineux optique (215), le récepteur de lumière (220) étant conçu pour émettre un signal de réception sur la base d'une quantité de lumière reçue ;
- un élément de diaphragme (240) qui est conçu pour recouvrir au moins partiellement le trajet lumineux (215) et qui est monté mobile par rapport au trajet lumineux (215) de telle sorte qu'une modification d'une position de l'élément de diaphragme (240) se traduit par une modification du recouvrement du trajet lumineux (215) ; **caractérisé par**
- un circuit d'évaluation qui est conçu pour réguler une quantité de lumière émise par l'émetteur de lumière (210) au moyen d'un signal de réglage qui résulte d'une minimisation d'une différence entre le signal de réception et un signal de référence, et pour générer un signal de déformation basé sur le signal de réglage ou sur un signal dérivé du signal de réglage ;
- l'ensemble de capteurs étant conçu pour être monté dans le meuble de telle sorte que l'élément de diaphragme (240) transforme une déformation ou un mouvement du composant réglable en une modification de la position de l'élément de diaphragme (240) par rapport au trajet lumineux (215).

2. Ensemble de capteurs selon la revendication 1,
dans lequel le circuit d'évaluation comprend un étage de filtrage et est agencé pour générer le signal de déformation par filtrage du signal de réglage ou du signal dérivé du signal de réglage avec l'étage de filtrage.

3. Ensemble de capteurs selon la revendication 2,
dans lequel l'étage de filtrage est conçu comme un étage de filtrage passe-bas et un différentiateur est monté en aval de l'étage de filtrage passe-bas, ou dans lequel l'étage de filtrage est conçu comme un étage de filtrage passe-bande.

4. Ensemble de capteurs selon l'une des revendications 1 à 3, dans lequel le trajet lumineux (215) est conçu comme une liaison optique directe pour la transmission de la lumière de l'émetteur de lumière (210) au récepteur de lumière (220), en particulier sans l'utilisation de réflexions.

5. Ensemble de capteurs selon l'une des revendications 1 à 4, dans lequel l'élément de diaphragme (240) est agencé pour être monté de manière fixe sur le composant réglable pour générer le changement de position de l'élément de diaphragme (240) par rapport au trajet lumineux (215).

6. Ensemble de capteurs selon l'une des revendications 1 à 4, dans lequel l'élément de diaphragme (240) est monté de manière élastique dans le module de détection et est conçu pour générer la modification de la position de l'élément de diaphragme (240) par rapport au trajet lumineux (215) par un contact avec le composant.

7. Ensemble de capteurs selon l'une des revendications 1 à 6, dans lequel l'émetteur de lumière (210) et le récepteur de lumière (220) sont disposés sur une carte de circuit imprimé commune (230).

8. Ensemble de capteurs selon la revendication 7,
dans lequel le trajet lumineux (215) est parallèle ou sensiblement parallèle à la surface de la carte de circuit imprimé (230).

9. Ensemble de capteurs selon l'une des revendications 7 ou 8,
dans lequel la carte de circuits imprimés (230) présente une ouverture en dessous du trajet lumineux (215), l'élément de diaphragme (240) étant monté mobile au-dessus et/ou dans l'ouverture.

10. Actionneur pour un meuble réglable électriquement avec une commande pour la commande de l'au moins un actionneur, l'actionneur étant aménagé pour le réglage d'un composant réglable du meuble et comprenant un ensemble de capteurs selon l'une des revendications 1 à 9, le module de détection étant disposé dans un boîtier de l'actionneur et l'élément de diaphragme (240) étant fixé dans l'actionneur de telle sorte qu'une déformation ou un mouvement du composant réglable transforme la modification de la position de l'élément de diaphragme (240) par rapport au trajet lumineux (215) par l'intermédiaire d'une déformation ou d'un mouvement d'un flasque de l'actionneur.

11. Commande pour un meuble réglable électriquement avec au moins un actionneur pour le réglage d'un composant réglable du meuble, la commande comprenant un ensemble de capteurs selon l'une des revendications 1 à 9, la commande étant aménagée pour commander l'au moins un actionneur et étant prévue pour être montée sur le composant réglable, et l'ensemble de capteurs étant intégré dans un boîtier de la commande.

12. Commande selon la revendication 11 avec un ensemble de capteurs selon l'une des revendications 7 à 9, dans laquelle la carte de circuit imprimé (230) de l'ensemble de capteurs est formée par une carte de circuit imprimé de la commande.

13. Commande selon la revendication 11 ou 12, dans laquelle la commande est configurée pour détecter une collision sur la base du signal de déformation, en particulier sur la base d'une modification du signal de déformation, et pour arrêter l'au moins un actionneur en cas de collision détectée et/ou pour commuter un sens de déplacement de l'au moins un actionneur.

14. Meuble réglable électriquement avec au moins un actionneur pour le réglage d'un composant réglable du meuble, avec une commande pour la commande de l'au moins un actionneur et avec au moins un ensemble de capteurs selon l'une des revendications 1 à 9, l'au moins un ensemble de capteurs étant monté dans le meuble de telle sorte que l'élément de diaphragme (240) transforme une déformation ou un mouvement du composant réglable en la modification de la position de l'élément de diaphragme (240) par rapport au trajet lumineux (215).

15. Procédé de fonctionnement d'un meuble réglable électriquement avec au moins un actionneur pour le réglage d'un composant réglable du meuble et avec au moins un ensemble de capteurs, l'au moins un ensemble de capteurs présentant un émetteur de lumière (210) et un récepteur de lumière (220) qui sont reliés entre eux par un trajet lumineux optique (215), ainsi qu'un élément de diaphragme (240) qui est conçu pour recouvrir au moins partiellement le trajet lumineux (215) et qui est monté mobile par rapport au trajet lumineux (215) de telle sorte qu'une modification d'une position de l'élément de diaphragme (240) se traduit par une modification du recouvrement du trajet lumineux (215), le procédé comprenant :
- émettre une première quantité de lumière depuis l'émetteur de lumière (210) vers le récepteur de lumière (220) via le trajet lumineux (215) ;
- générer, avec le récepteur de lumière (220), un signal de réception basé sur une deuxième quantité de lumière reçue via le trajet lumineux (215) ;
- convertir une déformation ou un mouvement du composant ajustable en un changement de position de l'élément de diaphragme (240) par rapport au trajet lumineux (215) ;
- réguler la première quantité de lumière par un signal de réglage résultant d'une minimisation d'une différence entre le signal reçu et un signal de référence ;
- générer un signal de déformation basé sur le signal de réglage ou sur un signal dérivé du signal de réglage ;
- détecter, sur la base du signal de déformation, en particulier sur la base d'une modification du signal de déformation, une collision du composant ajustable ; et
- arrêter un mouvement de l'au moins un actionneur et/ou commuter une direction de mouvement de l'au moins un actionneur lors d'une collision détectée.
